# EUROPEAN PATENT APPLICATION

(11) **EP 4 708 059 A1**
(43) Date of publication of application: **11.03.2026**
(21) Application number: 25157039.6
(22) Date of filing: 11.02.2025
(51) Int. Cl.: G06F 13/42

(54) **IMAGE TRANSMISSION AND RECEPTION SYSTEM, PROGRAM, AND IMAGE TRANSMISSION AND RECEPTION METHOD**

(30) Priority: 10.09.2024 JP 2024157008
(71) Applicant: FUJIFILM Business Innovation Corp., Minato-ku Tokyo (JP)
(72) Inventor: NISHIDA, Tomoyo, Yokohama-shi, Kanagawa (JP); YAMASAKI, Hideki, Yokohama-shi, Kanagawa (JP); SAITOH, Ryoko, Yokohama-shi, Kanagawa (JP); BANDO, Yoshifumi, Yokohama-shi, Kanagawa (JP)
(74) Representative: Kurig, Thomas

(57) **Abstract**

An image transmission and reception system includes an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, and a lock signal transmission control unit that adds error detection information calculated by using code information, which includes information on a logical state of the lock signal output from the receiving circuit and notification information other than the logical state of the lock signal, to the code information, and outputs the code information with the error detection information as serial data to the image transmission apparatus, and the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, and a lock signal receiving control unit that receives the serial data transmitted from the image reception apparatus, outputs notification information corresponding to the code information included in the received serial data to the image transmission control unit in a case where there is no inconsistency between the code information and the error detection information included in the received serial data, and outputs the lock signal in the logical state indicated by the code information to the transmission circuit.

## Description

### BACKGROUND OF THE INVENTION

### (i) Field of the Invention

The present disclosure relates to an image transmission and reception system, a program, and an image transmission and reception method.

### (ii) Description of Related Art

JP2019-110449A discloses a data communication device that is capable of transmitting data other than a lock signal from a receiving side circuit to a transmitting side circuit via the same signal line.

JP2020-043489A discloses an image transmission apparatus that is capable of transmitting information other than static image information without using a bus for transmitting information for communication control in a case where the static image information is transmitted using a standard for video image communication.

### SUMMARY OF THE INVENTION

A communication standard of V-by-One (registered trademark) may be used as a communication standard in a case of transmitting and receiving image data. In the V-by-One, a clock embedded method in which a data signal and clock information are transmitted as transmission data of a pair of differential signals at a transmission side to a receiving side. In a case of transmitting and receiving the image data using the clock embedded method, the receiving side extracts the clock signal and the image data from the received transmission data by performing clock data recovery (CDR) training processing on the transmission data from the transmission side. By performing such processing, in the V-by-One, skew is less likely to occur between the clock signal and the image data, so that high-speed transmission of the image data is realized.

In the V-by-One, in a case where CDR training processing is completed on the receiving side and the clock signal is extractable from the transmission data, the receiving side notifies the transmission side that the communication is established by using a LOCKN signal. Specifically, in a case where the LOCKN signal is at a high level (hereinafter, referred to as an H level), the LOCKN signal indicates a state in which the clock signal cannot be extracted from the transmission data, that is, a state in which communication is not established. In addition, in a case where the LOCKN signal is at a low level (hereinafter, referred to as an L level), the LOCKN signal indicates a state in which the clock signal can be extracted from the transmission data, that is, a state in which the communication is established. On the transmission side, in a case where the logic of the LOCKN signal from the receiving side is confirmed and it is confirmed that the LOCKN signal is at the L level indicating that the communication is established, an operation of including the image data in the transmission data and transmitting the transmission data to the receiving side is performed.

Here, there may be a case where notification information other than a state indicating that the clock signal can be extracted from the transmission data is to be transmitted from an image reception apparatus to an image transmission apparatus. However, only a LOCKN signal, which is a lock signal, is connected from the image reception apparatus to the image transmission apparatus. In addition, since the LOCKN signal is a single-ended signal, there is a problem that the LOCKN signal is vulnerable to noise from the outside. Therefore, in a configuration where the notification information from the image reception apparatus is directly superimposed on the LOCKN signal and transmitted to the image transmission apparatus, there is a possibility that errors may be included in the notification information received by the image transmission apparatus, and an improvement in the reliability of the notification information is required.

An object of the present disclosure is to provide an image transmission and reception system, a program, and an image transmission and reception method that can improve reliability of notification information received by an image transmission apparatus, as compared with a case where the notification information from an image reception apparatus is directly superimposed on a lock signal and transmitted to the image transmission apparatus.

According to a first aspect of the present disclosure, there is provided an image transmission and reception system including: an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, and a lock signal transmission control unit that adds error detection information calculated by using code information, which includes information on a logical state of the lock signal output from the receiving circuit and notification information other than the logical state of the lock signal, to the code information, and outputs the code information with the error detection information as serial data to the image transmission apparatus; and the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, and a lock signal receiving control unit that receives the serial data transmitted from the image reception apparatus, outputs notification information corresponding to the code information included in the received serial data to the image transmission control unit in a case where there is no inconsistency between the code information and the error detection information included in the received serial data, and outputs the lock signal in the logical state indicated by the code information to the transmission circuit.

According to a second aspect of the present disclosure, in the image transmission and reception system according to the first aspect, the notification information and the information on the logical state of the lock signal may be set as code information such that even in a case where a logic of any one bit is inverted, the information does not match other information.

According to a third aspect of the present disclosure, in the image transmission and reception system according to the second aspect, the lock signal receiving control unit may store, in advance, a correspondence table between the code information and a notification content or the logical state of the lock signal, and specify the notification content or the logical state of the lock signal indicated by the code information by comparing the code information included in the received serial data with the correspondence table.

According to a fourth aspect of the present disclosure, in the image transmission and reception system according to the first aspect, the notification information may be configured by a combination of a data type and a data content.

According to a fifth aspect of the present disclosure, in the image transmission and reception system according to any one aspect of the first to fourth aspects, the error detection information may be code information calculated by performing a preset operation on the code information.

According to a sixth aspect of the present disclosure, in the image transmission and reception system according to any one aspect of the first to fourth aspects, the error detection information may be bit information indicating a determination result of parity determination of the code information calculated by performing a preset operation on the code information.

According to a seventh aspect of the present disclosure, in the image transmission and reception system according to the sixth aspect, the bit information may be information in which a plurality of determination results of the parity determination of the code information, which is calculated by performing the preset operation on the code information, are successively presented.

According to an eighth aspect of the present disclosure, in the image transmission and reception system according to the seventh aspect, the information in which the plurality of determination results of the parity determination of the code information, which is calculated by performing the preset operation on the code information, are successively presented may be information in which the determination results of the parity determination of the code information, which is calculated by performing the preset operation on the code information, are successively presented for the number of digits of 10 in a case of decimal notation of the code information.

According to a ninth aspect of the present disclosure, there is provided a program for causing a computer to execute a process, the process including: in an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, adding error detection information calculated by using code information, which includes information on a logical state of the lock signal output from the receiving circuit and notification information other than the logical state of the lock signal, to the code information, and outputting the code information with the error detection information as serial data to the image transmission apparatus; and in the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, receiving the serial data transmitted from the image reception apparatus, outputting notification information corresponding to the code information included in the received serial data to the image transmission control unit in a case where there is no inconsistency between the code information and the error detection information included in the received serial data, and outputting the lock signal in the logical state indicated by the code information to the transmission circuit.

According to a tenth aspect of the present disclosure, there is provided an image transmission and reception method including: in an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, adding error detection information calculated by using code information, which includes information on a logical state of the lock signal output from the receiving circuit and notification information other than the logical state of the lock signal, to the code information, and outputting the code information with the error detection information as serial data to the image transmission apparatus; and in the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, receiving the serial data transmitted from the image reception apparatus, outputting notification information corresponding to the code information included in the received serial data to the image transmission control unit in a case where there is no inconsistency between the code information and the error detection information included in the received serial data, and outputting the lock signal in the logical state indicated by the code information to the transmission circuit.

According to the image transmission and reception system according to the first aspect of the present disclosure, it is possible to improve reliability of the notification information received by the image transmission apparatus, as compared with a case where the notification information from the image reception apparatus is directly superimposed on the lock signal and transmitted to the image transmission apparatus.

According to the image transmission and reception system according to the second aspect of the present disclosure, it is possible to prevent an erroneous notification content even in a case where the logic of one bit of the serial data output from the image reception apparatus to the image transmission apparatus is determined.

According to the image transmission and reception system according to the third aspect of the present disclosure, it is possible to notify the image transmission apparatus of various notification contents simply by associating the notification content with the code information in the correspondence table, from the image reception apparatus.

According to the image transmission and reception system according to the fourth aspect of the present disclosure, it is possible to transmit not only the preset notification content, such as an error notification, but also various types of data from the image reception apparatus to the image transmission apparatus.

According to the image transmission and reception system according to the fifth aspect of the present disclosure, it is possible to prevent the notification information or the information on the logical state of the lock signal from being erroneously received by the image transmission apparatus.

According to the image transmission and reception system according to the sixth aspect of the present disclosure, it is possible to prevent the notification information or the information on the logical state of the lock signal from being erroneously received by the image transmission apparatus without increasing the amount of data of the error detection information.

According to the image transmission and reception system according to the seventh aspect of the present disclosure, it is possible to prevent the occurrence of a pseudo error in which an error occurs in the error detection information and the notification information or the information on the logical state of the lock signal is normal but the error detection information is discarded.

According to the image transmission and reception system according to the eighth aspect of the present disclosure, it is possible to further prevent the occurrence of a pseudo error in which an error occurs in the error detection information and the notification information or the information on the logical state of the lock signal is normal but the error detection information is discarded.

According to the program according to the ninth aspect of the present disclosure, it is possible to improve reliability of the notification information received by the image transmission apparatus, as compared with a case where the notification information from the image reception apparatus is directly superimposed on the lock signal and transmitted to the image transmission apparatus.

According to the image transmission and reception method according to the tenth aspect of the present disclosure, it is possible to improve reliability of the notification information received by the image transmission apparatus, as compared with a case where the notification information from the image reception apparatus is directly superimposed on the lock signal and transmitted to the image transmission apparatus.

### BRIEF DESCRIPTION OF THE DRAWINGS

Exemplary embodiment(s) of the present invention will be described in detail based on the following figures, wherein:
Fig. 1 is a block diagram illustrating a configuration of an image transmission and reception system as a comparative example;
Fig. 2 is a block diagram illustrating a configuration of an image transmission and reception system according to one exemplary embodiment of the present disclosure;
Fig. 3 is a diagram illustrating an example of an error code correspondence table stored by a LOCKN signal receiving control unit 130;
Fig. 4 is a diagram illustrating a specific example of a combination of an error code and error detection information;
Fig. 5 is a diagram illustrating another specific example of the combination of the error code and the error detection information; and
Fig. 6 is a flowchart for describing an overall operation of the image transmission and reception system in a case where data such as an error code is transmitted from the image reception apparatus 20 to the image transmission apparatus 10.

### DETAILED DESCRIPTION OF THE INVENTION

Hereinafter, an exemplary embodiment of the present disclosure will be described in detail with reference to the drawings.

A communication standard of V-by-One (registered trademark) may be used as a communication standard in a case of transmitting and receiving image data. In the V-by-One, a clock embedded method in which a data signal and clock information are transmitted as transmission data of a pair of differential signals at a transmission side to a receiving side. In a case of transmitting and receiving the image data using the clock embedded method, the receiving side extracts the clock signal and the image data from the received transmission data by performing clock data recovery (CDR) training processing on the transmission data from the transmission side. By performing such processing, in the V-by-One, skew is less likely to occur between the clock signal and the image data, so that high-speed transmission of the image data is realized.

In the V-by-One, in a case where the CDR training processing is completed on the receiving side and the clock signal is extractable from the transmission data, the receiving side notifies the transmission side that the communication is established by using a LOCKN signal. Specifically, in a case where the LOCKN signal is at a high level (hereinafter, referred to as an H level), the LOCKN signal indicates a state in which the clock signal cannot be extracted from the transmission data, that is, a state in which communication is not established. In addition, in a case where the LOCKN signal is at a low level (hereinafter, referred to as an L level), the LOCKN signal indicates a state in which the clock signal can be extracted from the transmission data, that is, a state in which the communication is established. On the transmission side, in a case where the logic of the LOCKN signal from the receiving side is confirmed and it is confirmed that the LOCKN signal is at the L level indicating that the communication is established, an operation of including the image data in the transmission data and transmitting the transmission data to the receiving side is performed.

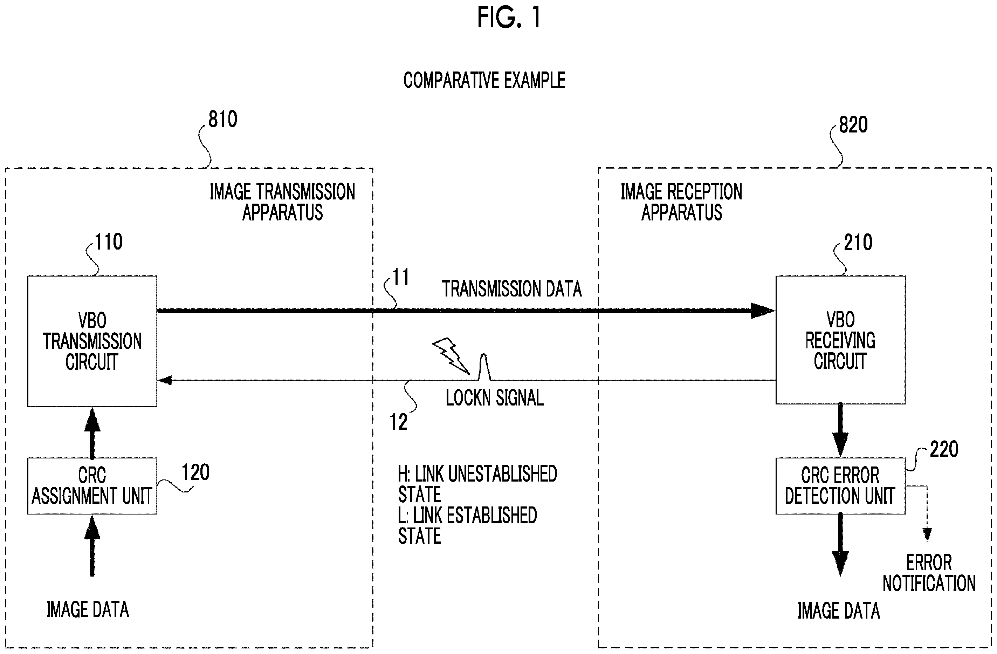

Here, before describing a configuration of the image transmission and reception system of the present exemplary embodiment, a configuration of an image transmission and reception system in a case where the technique of the present disclosure is not applied will be described as a comparative example with reference to Fig. 1.

The image transmission and reception system of the comparative example is configured with an image transmission apparatus 810 and an image reception apparatus 820 as illustrated in Fig. 1. The image transmission apparatus 810 includes a V-by-One (VBO) transmission circuit 110 and a cyclic redundancy check (CRC) assignment unit 120. In addition, the image reception apparatus 820 includes a VBO receiving circuit 210 and a CRC error detection unit 220.

Such an image transmission and reception system is used, for example, to transmit and receive image data between an image capturing device or a scanner device and a signal processing unit, and between the signal processing unit and an image display device or the like.

The CRC assignment unit 120 assigns a CRC code, which is an error detection code, to the image data to be transmitted to the image reception apparatus 820. Specifically, the CRC assignment unit 120 assigns a remainder, which is obtained in a case where the image data is divided by a preset generation polynomial, to the image data as the CRC code.

The VBO transmission circuit 110 transmits the transmission data 11 in which the clock signal is superimposed on the image data to the image reception apparatus 820, and receives the LOCKN signal 12 from the image reception apparatus 820. Here, in a case where the logical state of the LOCKN signal 12 is at the H level, the LOCKN signal 12 indicates that the CDR training processing is not completed in the image reception apparatus 820 and the clock signal cannot be extracted from the transmission data 11, that is, the communication is not established (the link is not established). In a case where the logical state of the LOCKN signal 12 is at the L level, the LOCKN signal 12 indicates that the CDR training processing is completed in the image reception apparatus 820 and the clock signal can be extracted from the transmission data 11, that is, the communication is established. Specifically, the LOCKN signal 12 is a lock signal that indicates a lock state of a phase locked loop (PLL) circuit for the CDR mounted in the VBO receiving circuit 210.

Therefore, in a case where the LOCKN signal 12 to be input changes from the H level, which is a logical state indicating that the link is not established, to the L level, which is a logical state indicating that the link is established, the VBO transmission circuit 110 transmits the transmission data 11 in which the clock signal is superimposed on the image data to the image reception apparatus 820.

The VBO receiving circuit 210 extracts a clock signal from the transmission data 11 transmitted from the image transmission apparatus 810 and acquires image data from the transmission data 11 by using the extracted clock signal. In a case where the clock signal is extractable from the transmission data 11, the VBO receiving circuit 210 changes the LOCKN signal 12 indicating whether or not the communication is established from the H level, which is a logical state indicating that the communication is not established, to the L level which is a logical state indicating that the communication is established.

The CRC error detection unit 220 detects an error in the image data by using the error detection code assigned to the image data acquired by the VBO receiving circuit 210. Specifically, the CRC error detection unit 220 extracts the CRC code assigned to the image data received by the VBO receiving circuit 210, and inspects whether or not the image data is damaged depending on whether or not the extracted CRC code matches the remainder obtained in a case where the image data is divided by a preset generation polynomial. In a case where an error is detected in the received image data, the CRC error detection unit 220 notifies the possibility of an error in the received image data by transmitting an error notification to the downstream circuit.

After starting the transmission of the transmission data 11 to the image reception apparatus 820, in a case where the LOCKN signal 12 changes from the H level to the L level, the VBO transmission circuit 110 determines that the CDR training processing has been completed in the image reception apparatus 820, and transmits the image data on which the clock signal is superimposed, as the transmission data 11 to the image reception apparatus 820. In addition, in a case where the LOCKN signal 12 changes from the L level to the H level while the transmission data 11 is being transmitted to the image reception apparatus 820, the VBO transmission circuit 110 determines that the loss of lock in the CDR circuit has occurred in the image reception apparatus 820, and stops the transmission of the transmission data 11. The VBO transmission circuit 110 resumes the CDR training processing.

Here, there may be a case where notification information other than a state indicating that the clock signal can be extracted from the transmission data is to be transmitted from the image reception apparatus 820 to the image transmission apparatus 810. However, only the LOCKN signal 12, which is a lock signal, is connected from the image reception apparatus 820 to the image transmission apparatus 810. In addition, since the LOCKN signal 12 is a single-ended signal, there is a problem that the LOCKN signal 12 is more vulnerable to noise from the outside than the transmission data 11 which is a differential signal. Therefore, in a configuration where the notification information from the image reception apparatus 820 is directly superimposed on the LOCKN signal 12 and transmitted to the image transmission apparatus 810, there is a possibility that errors may be included in the notification information received by the image transmission apparatus 810, and an improvement in the reliability of the notification information is required.

Therefore, in the image transmission and reception system of the present exemplary embodiment, the reliability of the notification information received by the image transmission apparatus is improved as compared with a case where the notification information from the image reception apparatus is directly superimposed on the LOCKN signal and transmitted to the image transmission apparatus by adopting the following configuration.

### [One Exemplary Embodiment according to Technique of Present Disclosure]

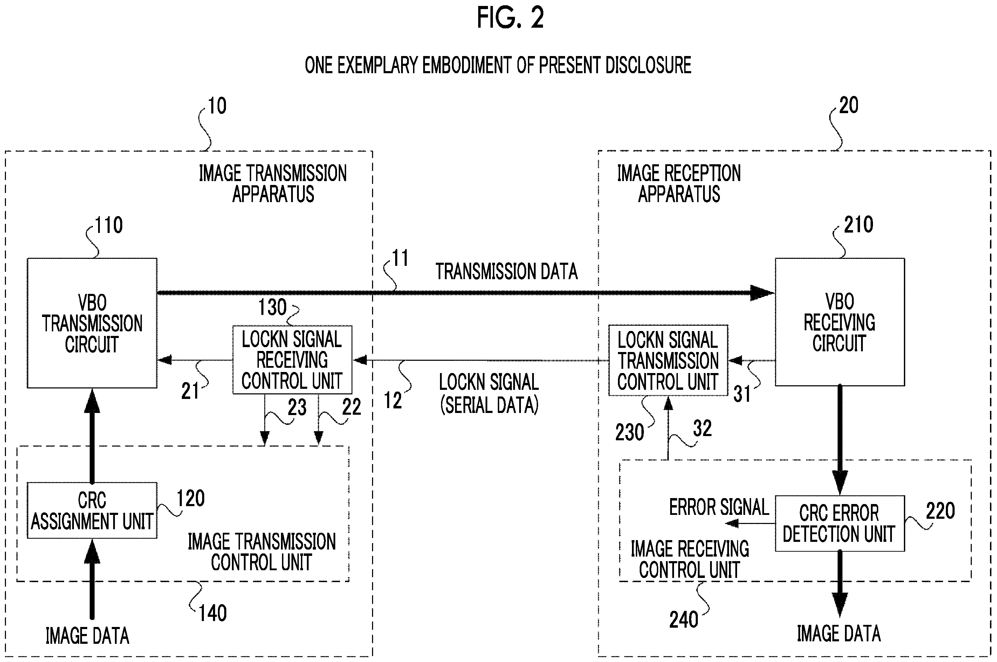

Fig. 2 illustrates a configuration of an image transmission and reception system according to one exemplary embodiment of the present disclosure. In Fig. 2, the same components as the components illustrated in Fig. 1 are denoted by the same reference numerals, and the description thereof will be omitted.

As illustrated in Fig. 2, the image transmission and reception system of the present exemplary embodiment is configured with an image transmission apparatus 10 and an image reception apparatus 20.

The image transmission apparatus 10 includes the VBO transmission circuit 110, the image transmission control unit 140, and a LOCKN signal receiving control unit 130. In addition, the image reception apparatus 20 includes the VBO receiving circuit 210, an image receiving control unit 240, and a LOCKN signal transmission control unit 230.

The image transmission apparatus 10 has a configuration in which the LOCKN signal receiving control unit 130 is added to the image transmission apparatus 810 illustrated in Fig. 1, and the image transmission control unit 140 including the CRC assignment unit 120 is illustrated. In addition, the image reception apparatus 20 has a configuration in which the LOCKN signal transmission control unit 230 is added to the image reception apparatus 820 illustrated in Fig. 1, and the image receiving control unit 240 including the CRC error detection unit 220 is illustrated.

The VBO transmission circuit 110 in the present exemplary embodiment transmits transmission data 11 in which a clock signal is superimposed on image data to the image reception apparatus 20. In addition, the VBO transmission circuit 110 receives the LOCKN signal 12 from the image reception apparatus 20 as a transmission side LOCKN signal 21 via the LOCKN signal receiving control unit 130. In a case where the transmission side LOCKN signal 21 to be input changes from the H level, which is a logical state indicating that the link is not established, to the L level, which is a logical state indicating that the link is established, the VBO transmission circuit 110 transmits the transmission data 11 in which the clock signal is superimposed on the image data to the image reception apparatus 20.

The image transmission control unit 140 controls the transmission of the image data to the image reception apparatus 20 via the VBO transmission circuit 110.

The VBO receiving circuit 210 extracts a clock signal from the transmission data 11 transmitted from the image transmission apparatus 10 and acquires image data from the transmission data 11 by using the extracted clock signal. In a case where the clock signal is extractable from the transmission data 11, the VBO receiving circuit 210 changes a LOCKN signal 31 indicating whether or not the communication is established from a high level, which is a logical state indicating that the communication is not established, to a low level which is a logical state indicating that the communication is established.

The image receiving control unit 240 controls the reception processing of the image data by the VBO receiving circuit 210. In addition, in a case where an error signal is detected from the CRC error detection unit 220, the image receiving control unit 240 outputs notification information 32 indicating that the error is detected in the received image data (CRC mismatch) to the LOCKN signal transmission control unit 230. In addition, the image receiving control unit 240 also outputs an error other than the CRC mismatch described above to the LOCKN signal transmission control unit 230 as the notification information 32.

The LOCKN signal transmission control unit 230 converts information on the logical state of the LOCKN signal 31 output from the VBO receiving circuit 210 and the notification information 32 other than the logical state of the LOCKN signal 31 into code information. The LOCKN signal transmission control unit 230 adds error detection information calculated by using the code information to the code information including the information on the logical state of the LOCKN signal 31 and the notification information 32 other than the logical state of the LOCKN signal 31, and outputs the code information with the error detection information to the image transmission apparatus 10 as the LOCKN signal 12 of serial data.

The LOCKN signal receiving control unit 130 receives the LOCKN signal 12, which is the serial data transmitted from the image reception apparatus 20. The LOCKN signal receiving control unit 130 determines whether or not the code information included in the LOCKN signal 12 of the received serial data is valid. Specifically, the LOCKN signal receiving control unit 130 determines whether or not there is no inconsistency between the code information and the error detection information included in the LOCKN signal 12 of the received serial data. In a case where there is no inconsistency between the code information and the error detection information included in the received LOCKN signal 12, the LOCKN signal receiving control unit 130 outputs the notification information 22 corresponding to the code information included in the received LOCKN signal 12 to the image transmission control unit 140, and outputs the transmission side LOCKN signal 21 of the logical state indicated by the code information to the VBO transmission circuit 110.

In addition, in a case where there is inconsistency between the code information and the error detection information included in the received LOCKN signal 12, the LOCKN signal receiving control unit 130 outputs an error notification 23 to the image transmission control unit 140. The image transmission control unit 140 that has received the error notification 23 controls the VBO transmission circuit 110 to transmit a retransmission request to the image reception apparatus 20 as necessary.

### [Method of Determining Validity]

Here, a specific method of determining validity of the code information included in the LOCKN signal 12 received by the LOCKN signal receiving control unit 130 will be described.

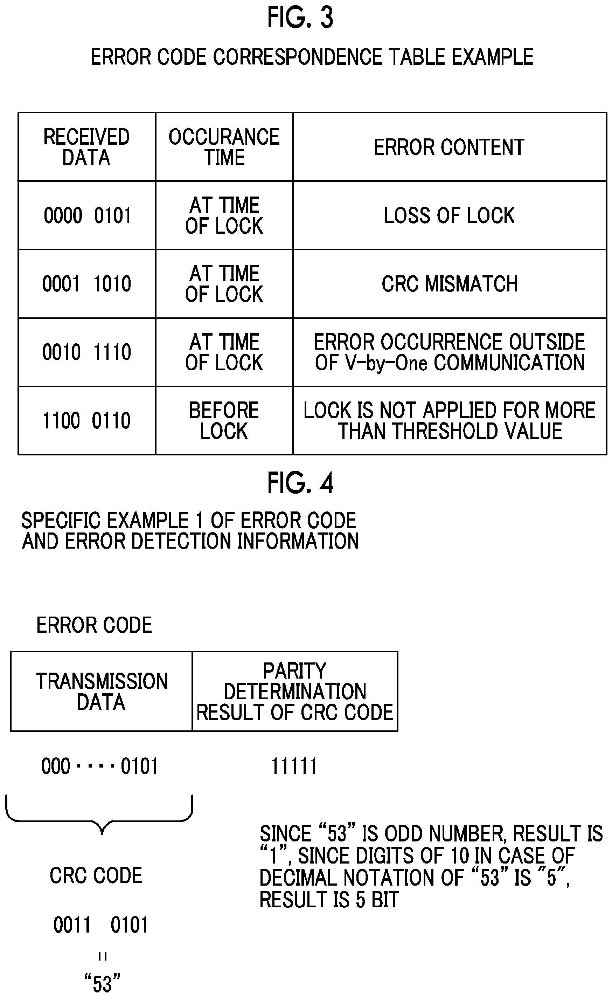

For example, the LOCKN signal receiving control unit 130 stores, in advance, a correspondence table in which the code information corresponds to the notification content or the logical state of the LOCKN signal 31, and specifies the notification content or the logical state of the LOCKN signal 31 indicated by the code information by comparing with a correspondence table that stores the code information included in the received LOCKN signal 12 with the stored correspondence table. For example, in a case where the notification content notified to the image transmission apparatus 10 from the image reception apparatus 20 is an error notification, the LOCKN signal receiving control unit 130 stores an error code correspondence table, and specifies the notification content of the error notification from the code information by using the error code correspondence table. Fig. 3 illustrates an example of an error code correspondence table stored by the LOCKN signal receiving control unit 130.

With reference to the error code correspondence table illustrated in Fig. 3, in a case where the code information of the received data received as the LOCKN signal 12 is "0000 0101 ", it is possible to determine that the notification content of the error notification is "loss of lock". In a case where the LOCKN signal receiving control unit 130 receives the notification content of "loss of lock" in this way, the logical state of the transmission side LOCKN signal 21 is changed from the low level to the high level.

Here, with reference to the error code correspondence table illustrated in Fig. 3, it can be seen that the notification information and the information on the logical state of the LOCKN signal 31 are set as the code information such that even in a case where the logic of any one bit is inverted, the inverted code information does not match other information. For example, in a case where the code information is "0001 1010", it is determined that the notification content is an error notification of "CRC mismatch", and the code information is determined to be valid. However, in a case where the code information is "0011 1010", the corresponding data is not set in the error code correspondence table, so that it is determined that the code information is not valid, that is, abnormal.

That is, even in a case where the noise is superimposed on the LOCKN signal 12 and the logic of one bit of the code information is determined, because two different types of error contents that are different by one bit are not set, it is possible to prevent the code information on which the noise is superimposed from being erroneously determined as a different notification content.

The notification from the image reception apparatus 20 to the image transmission apparatus 10 as described above is not necessarily limited to being transmitted only after the lock. For example, even before the lock, the notification information can be transmitted from the image reception apparatus 20 to the image transmission apparatus 10 by using the LOCKN signal 12, and thus it is possible to notify the error contents such as an error in which the lock is not applied for a preset threshold value or more.

Further, the notification information transmitted from the image reception apparatus 20 to the image transmission apparatus 10 may be data other than the error notification, in addition to the error notification. In a case where the data other than the error notification is transmitted by the LOCKN signal 12 as described above, the data type may be set in advance by using the correspondence table, and the notification information may be transmitted as a combination of "data type" and "data content". For example, various types of data, such as "status information", "periodic communication of state", "signal for control", and "error information", can be set as the data type.

### [Determination of Validity Based on Error Detection Information]

As described above, for example, a CRC code, which is code information calculated by performing a preset operation on the code information, is added to the code information included in the LOCKN signal 12 as error detection information. Therefore, in the LOCKN signal receiving control unit 130, a value of the CRC code is calculated by performing an operation on the received code information, the calculated value of the CRC code is compared with a value of the CRC code received in the LOCKN signal 12, and in a case where the values match with each other, it is determined that the received code information is valid. In addition, in a case where the value of the calculated CRC code does not match the value of the CRC code received in the LOCKN signal 12, the LOCKN signal receiving control unit 130 determines that the received code information is not valid.

However, instead of directly using the calculated value of the CRC code as binary data as error detection information, parity determination of the CRC code may be performed, and the determination result may be used as error detection information in the form of one bit. That is, as the error detection information, bit information indicating the determination result of the parity determination of the CRC code that is calculated by performing the preset operation on the code information may be included in the LOCKN signal 12.

Further, the bit information may be used as information in which the determination result of the parity determination of the CRC code, which is calculated by performing a preset operation on the code information, is successively presented in series. For example, the determination result of the parity determination of the CRC code, which is calculated by performing the preset operation on the code information, may be used as information in which the CRC code is successively presented for the number of digits of 10 in a case of the decimal notation.

Fig. 4 illustrates a specific example of a combination of the error code and the error detection information in a case where such a configuration is made.

In the combination example illustrated in Fig. 4, the specific example in which information of 5 bits "11111" is added as the error detection information to the transmission data of the error code "000 ... 0101" is illustrated.

Here, in a case where the CRC code of the error code "000 ... 0101" is "0011 0101", the decimal notation of the CRC code is "53". Since the CRC code "53" is an odd number, the additional bit is "1", and since the digits of 10 in the decimal notation of the CRC code is "5", a value obtained by successively adding additional bits " 1" for 5 bit is added as the error detection information. That is, the value of the CRC code is calculated, and data " 11111" obtained by successively repeating the parity determination result of the CRC code for the number of digits of 10 in the decimal notation of the CRC code is added as error detection information.

In a case where the value of the CRC code is "42", the parity determination result is "0" indicating an even number, and data "0000" of 4 successive bits of this "0", which is the number of digits of 10 in the decimal notation of the CRC code, is added as error detection information.

Here, instead of simply using one bit of the parity determination result as the error detection information, successive repetition for the number of digits of 10 in the decimal notation of the CRC code is to increase the amount of information. In a case where only one bit of the parity determination result is used as the error detection information, in a case where the logical state of the one bit of error detection information itself is determined by noise, it is not possible to determine whether the error detection information is erroneous or the transmission data is erroneous. Therefore, there is a possibility that a pseudo error in which transmission data such as notification information and information on the logical state of the lock signal is discarded even though the transmission data is normal may occur. However, by making the parity determination result successive for a plurality of bits, it is possible to determine that an error has occurred in the error detection information itself, thereby preventing the occurrence of such a pseudo error. For example, in a case where the error detection information of " 11111" originally is changed to "11011" in the middle of the transmission, the LOCKN signal receiving control unit 130 can determine that the error detection information is not normal.

In the above description, a case where the error detection information is the information of one bit of the parity determination result, which is successively presented for the number of digits of 10 in the decimal notation of the CRC code, has been described. However, the information of one bit of the parity determination result may be successively presented for the number of digits of one in the decimal notation of the CRC code.

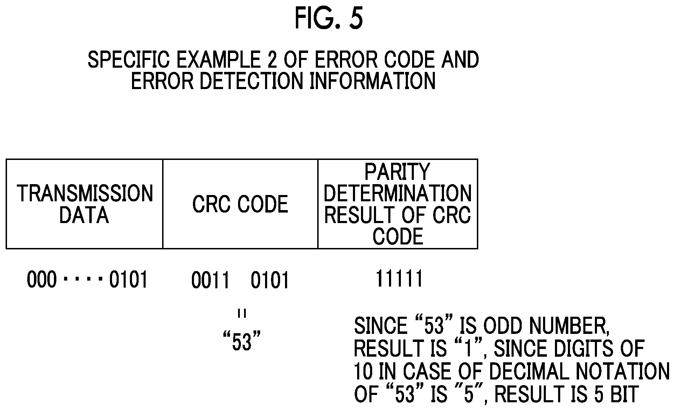

Fig. 5 illustrates another specific example of the combination of the error code and the error detection information. In the combination example illustrated in Fig. 5, the specific example in which the CRC code and the information on the parity determination result of the CRC code are added to the transmission data of the error code as the error detection information is illustrated. Although the amount of data to be transmitted is increased with such a configuration, the reliability of the notification information and the like is further improved.

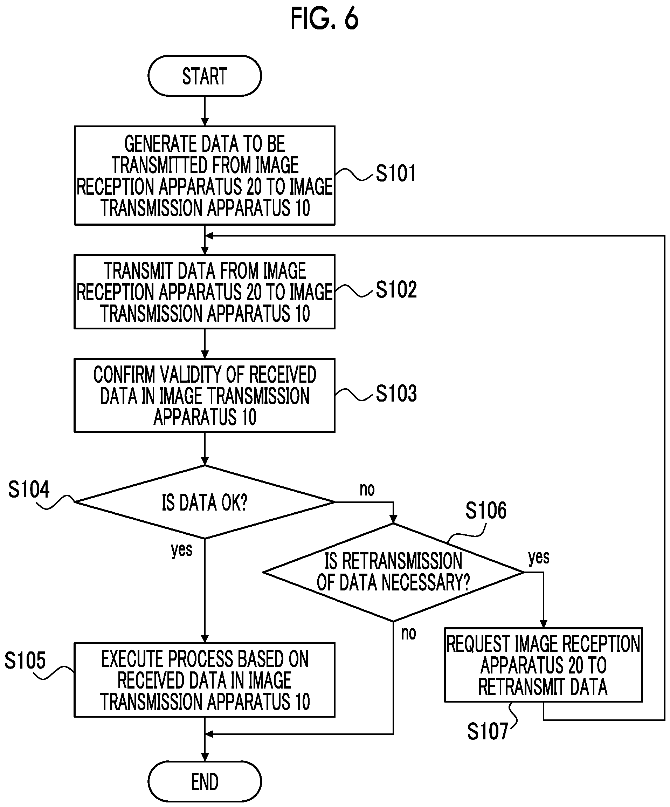

Finally, an overall operation of the image transmission and reception system in a case where data such as an error code is transmitted from the image reception apparatus 20 to the image transmission apparatus 10 will be described with reference to a flowchart of Fig. 6.

First, the LOCKN signal transmission control unit 230 generates data such as an error code to be transmitted from the image reception apparatus 20 to the image transmission apparatus 10 (Step S101).

The LOCKN signal transmission control unit 230 transmits the generated data to the image transmission apparatus 10 as the LOCKN signal 12 (Step S102).

Then, in the image transmission apparatus 10, the LOCKN signal receiving control unit 130 receives the data transmitted as the LOCKN signal 12 and confirms the validity of the received data (Step S103).

Then, in a case where it is determined that the received data is valid (yes in Step S104), the notification information 22 is output from the LOCKN signal receiving control unit 130 to the image transmission control unit 140. As a result, in the image transmission apparatus 10, a process based on the received data is executed (Step S105).

In a case where it is determined that the received data is not valid (no in Step S104), the error notification 23 is output from the LOCKN signal receiving control unit 130 to the image transmission control unit 140. Then, the image transmission control unit 140 determines whether or not retransmission of the data is necessary (Step S106).

In a case where it is determined that the retransmission of the data is necessary (yes in Step S106), the image transmission control unit 140 requests the image reception apparatus 20 to retransmit the data via the VBO transmission circuit 110, and returns to Step S 102 (Step S107). In a case where it is determined that the retransmission of the data is not necessary (no in Step S106), the image transmission control unit 140 ends the process without executing any process.

In the present exemplary embodiment, each process is executed on an arbitrary computer. In addition, the arbitrary computer may execute these processes by a processor as hardware, a program as software, or a combination thereof. In this case, the processor is configured to cooperate with the program and execute various types of processes in the present exemplary embodiment, and may function as each unit or each means in the present exemplary embodiment. Further, the execution order of the processes executed by the processor is not limited to the above-described order, and may be changed as appropriate. The arbitrary computer may be a general-purpose computer, a computer for a specific application, a workstation, or another system that is capable of executing each process.

The processor may be configured by one or a plurality of pieces of hardware, and the type of hardware is not limited. In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed. The hardware is configured by an electric circuit (circuitry) or the like in which circuit elements such as semiconductor elements are combined.

Further, the program may be software such as firmware or microcode. In addition, the program may be, for example, a program module group, and each function thereof may be realized by a processor configured to execute each function. The program may be program codes or a plurality of code segments stored in one or a plurality of non-transitory computer readable media (for example, a storage medium or other storage). The program may be divided and stored in a plurality of non-transitory computer readable media present in apparatuses that are physically separated from each other. The program code or the code segment may represent any combination of a procedure, a function, a subprogram, a routine, a subroutine, a module, a software package, a class, or an instruction, a data structure, or a program statement. The program code or the code segment may be connected to another code segment or a hardware circuit by transmitting and receiving information, data, an argument, a parameter, or a content of a memory. In addition, the program of the present application may be provided as a program product.

In the exemplary embodiments described above, the operation of the processor may not only be performed by one processor, but may also be performed by a plurality of processors which are located physically apart from each other cooperatively. In addition, the order of each operation of the processor is not limited to one described in the exemplary embodiments described above, and may be changed as appropriate.

The "system" in the present exemplary embodiment includes both a system that is configured by a plurality of apparatuses and a system that is configured by a single apparatus.

### [Supplementary Note]

(((1))) An image transmission and reception system comprising:
   an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, and a lock signal transmission control unit that adds error detection information calculated by using code information, which includes information on a logical state of the lock signal output from the receiving circuit and notification information other than the logical state of the lock signal, to the code information, and outputs the code information with the error detection information as serial data to the image transmission apparatus; and
   the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, and a lock signal receiving control unit that receives the serial data transmitted from the image reception apparatus, outputs notification information corresponding to the code information included in the received serial data to the image transmission control unit in a case where there is no inconsistency between the code information and the error detection information included in the received serial data, and outputs the lock signal in the logical state indicated by the code information to the transmission circuit.
(((2))) The image transmission and reception system according to (((1))),
   wherein the notification information and the information on the logical state of the lock signal are set as code information such that even in a case where a logic of any one bit is inverted, the information does not match other information.
(((3))) The image transmission and reception system according to (((2))),
   wherein the lock signal receiving control unit stores, in advance, a correspondence table between the code information and a notification content or the logical state of the lock signal, and specifies the notification content or the logical state of the lock signal indicated by the code information by comparing the code information included in the received serial data with the correspondence table.
(((4))) The image transmission and reception system according to (((1))),
   wherein the notification information is configured by a combination of a data type and a data content.
(((5))) The image transmission and reception system according to any one of (((1))) to (((4))),
   wherein the error detection information is code information calculated by performing a preset operation on the code information.
(((6))) The image transmission and reception system according to any one of (((1))) to (((4))),
   wherein the error detection information is bit information indicating a determination result of parity determination of the code information calculated by performing a preset operation on the code information.
(((7))) The image transmission and reception system according to (((6))),
   wherein the bit information is information in which a plurality of determination results of the parity determination of the code information, which is calculated by performing the preset operation on the code information, are successively presented.
(((8))) The image transmission and reception system according to (((7))),
   wherein the information in which the plurality of determination results of the parity determination of the code information, which is calculated by performing the preset operation on the code information, are successively presented is information in which the determination results of the parity determination of the code information, which is calculated by performing the preset operation on the code information, are successively presented for the number of digits of 10 in a case of decimal notation of the code information.
(((9))) A program for causing a computer to execute a process, the process comprising:
   in an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, adding error detection information calculated by using code information, which includes information on a logical state of the lock signal output from the receiving circuit and notification information other than the logical state of the lock signal, to the code information, and outputting the code information with the error detection information as serial data to the image transmission apparatus; and
   in the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, receiving the serial data transmitted from the image reception apparatus, outputting notification information corresponding to the code information included in the received serial data to the image transmission control unit in a case where there is no inconsistency between the code information and the error detection information included in the received serial data, and outputting the lock signal in the logical state indicated by the code information to the transmission circuit.

According to the image transmission and reception system according to (((1)))), it is possible to improve reliability of the notification information received by the image transmission apparatus, as compared with a case where the notification information from the image reception apparatus is directly superimposed on the lock signal and transmitted to the image transmission apparatus.

According to the image transmission and reception system according to (((2))), it is possible to prevent an erroneous notification content even in a case where the logic of one bit of the serial data output from the image reception apparatus to the image transmission apparatus is determined.

According to the image transmission and reception system according to (((3))), it is possible to notify the image transmission apparatus of various notification contents simply by associating the notification content with the code information in the correspondence table, from the image reception apparatus.

According to the image transmission and reception system according to (((4))), it is possible to transmit not only the preset notification content, such as an error notification, but also various types of data from the image reception apparatus to the image transmission apparatus.

According to the image transmission and reception system according to (((5))), it is possible to prevent the notification information or the information on the logical state of the lock signal from being erroneously received by the image transmission apparatus.

According to the image transmission and reception system according to (((6))), it is possible to prevent the notification information or the information on the logical state of the lock signal from being erroneously received by the image transmission apparatus without increasing the amount of data of the error detection information.

According to the image transmission and reception system according to (((7))), it is possible to prevent the occurrence of a pseudo error in which an error occurs in the error detection information and the notification information or the information on the logical state of the lock signal is normal but the error detection information is discarded.

According to the image transmission and reception system according to (((8))), it is possible to further prevent the occurrence of a pseudo error in which an error occurs in the error detection information and the notification information or the information on the logical state of the lock signal is normal but the error detection information is discarded.

According to the program according to (((9))), it is possible to improve reliability of the notification information received by the image transmission apparatus, as compared with a case where the notification information from the image reception apparatus is directly superimposed on the lock signal and transmitted to the image transmission apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image transmission apparatus
11: transmission data
12: LOCKN signal
20: image reception apparatus
21: transmission side LOCKN signal
22: notification information
23: error notification
31: receiving side LOCKN signal
32: notification information
110: VBO transmission circuit
120: CRC assignment unit
130: LOCKN signal receiving control unit
140: image transmission control unit
210: VBO receiving circuit
220: CRC error detection unit
230: LOCKN signal transmission control unit
240: image receiving control unit
810: image transmission apparatus
820: image reception apparatus

## Claims

1. An image transmission and reception system comprising:
an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, and a lock signal transmission control unit that adds error detection information calculated by using code information, which includes information on a logical state of the lock signal output from the receiving circuit and notification information other than the logical state of the lock signal, to the code information, and outputs the code information with the error detection information as serial data to the image transmission apparatus; and
the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, and a lock signal receiving control unit that receives the serial data transmitted from the image reception apparatus, outputs notification information corresponding to the code information included in the received serial data to the image transmission control unit in a case where there is no inconsistency between the code information and the error detection information included in the received serial data, and outputs the lock signal in the logical state indicated by the code information to the transmission circuit.

2. The image transmission and reception system according to claim 1,
wherein the notification information and the information on the logical state of the lock signal are set as code information such that even in a case where a logic of any one bit is inverted, the information does not match other information.

3. The image transmission and reception system according to claim 2,
wherein the lock signal receiving control unit stores, in advance, a correspondence table between the code information and a notification content or the logical state of the lock signal, and specifies the notification content or the logical state of the lock signal indicated by the code information by comparing the code information included in the received serial data with the correspondence table.

4. The image transmission and reception system according to claim 1,
wherein the notification information is configured by a combination of a data type and a data content.

5. The image transmission and reception system according to any one of claims 1 to 4,
wherein the error detection information is code information calculated by performing a preset operation on the code information.

6. The image transmission and reception system according to any one of claims 1 to 4,
wherein the error detection information is bit information indicating a determination result of parity determination of the code information calculated by performing a preset operation on the code information.

7. The image transmission and reception system according to claim 6,
wherein the bit information is information in which a plurality of determination results of the parity determination of the code information, which is calculated by performing the preset operation on the code information, are successively presented.

8. The image transmission and reception system according to claim 7,
wherein the information in which the plurality of determination results of the parity determination of the code information, which is calculated by performing the preset operation on the code information, are successively presented is information in which the determination results of the parity determination of the code information, which is calculated by performing the preset operation on the code information, are successively presented for the number of digits of 10 in a case of decimal notation of the code information.

9. A program for causing a computer to execute a process, the process comprising:
in an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, adding error detection information calculated by using code information, which includes information on a logical state of the lock signal output from the receiving circuit and notification information other than the logical state of the lock signal, to the code information, and outputting the code information with the error detection information as serial data to the image transmission apparatus; and
in the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, receiving the serial data transmitted from the image reception apparatus, outputting notification information corresponding to the code information included in the received serial data to the image transmission control unit in a case where there is no inconsistency between the code information and the error detection information included in the received serial data, and outputting the lock signal in the logical state indicated by the code information to the transmission circuit.

10. An image transmission and reception method comprising:
in an image reception apparatus including a receiving circuit that extracts a clock signal from transmission data transmitted from an image transmission apparatus, acquires image data from the transmission data by using the extracted clock signal, and in a case where the clock signal is extractable from the transmission data, changes a lock signal, which indicates whether or not communication is established, from a first logical state indicating that the communication is not established to a second logical state indicating that the communication is established, adding error detection information calculated by using code information, which includes information on a logical state of the lock signal output from the receiving circuit and notification information other than the logical state of the lock signal, to the code information, and outputting the code information with the error detection information as serial data to the image transmission apparatus; and
in the image transmission apparatus including a transmission circuit that transmits the transmission data in which the clock signal is superimposed on the image data to the image reception apparatus in a case where an input lock signal changes from the first logical state to the second logical state, an image transmission control unit that controls transmission of the image data to the image reception apparatus via the transmission circuit, receiving the serial data transmitted from the image reception apparatus, outputting notification information corresponding to the code information included in the received serial data to the image transmission control unit in a case where there is no inconsistency between the code information and the error detection information included in the received serial data, and outputting the lock signal in the logical state indicated by the code information to the transmission circuit.
